# EUROPEAN PATENT APPLICATION

(11) **EP 2 634 674 A1**
(43) Date of publication of application: **04.09.2013**
(21) Application number: 11836312.6
(22) Date of filing: 26.10.2011
(51) Int. Cl.: G06F 3/041, G06F 3/048, H04N 5/00, H04Q 9/00

(54) **ELECTRONIC DEVICE**

(30) Priority: 28.10.2010 JP 2010242477
(71) Applicant: Sharp Kabushiki Kaisha, Osaka-shi, Osaka 545-8522 (JP)
(72) Inventor: YARITA, Takeshi, Osaka-shi, Osaka 545-8522 (JP); SATO,Keiichiro, Osaka-shi, Osaka 545-8522 (JP); SHIMIZU, Takamasa, Osaka-shi, Osaka 545-8522 (JP); ITO, Hiromichi, Osaka-shi, Osaka 545-8522 (JP)
(74) Representative: Müller - Hoffmann & Partner
(86) International application number: PCT/JP2011/074620
(87) International publication number: WO 2012/057179

(57) **Abstract**

To provide an electronic apparatus that can, in operating the electronic apparatus using a remote control (and especially, a touchremote controller), identify the content of operation by adding an interpretation on the basis of rules held outside the remote control instead of uniquely identifying the content of operation by a transmission signal from the remote control. Provided is an electronic apparatus which has display output means, means for acquiring gesture information acquiring gesture information indicating a user's finger action, etc. from the remote control, means for acquiring apparatus status information for distinguishing apparatus status by a combination of a plurality of operations allowed for the user;
means for
storing interpretation information for interpreting, based on apparatus status information, that the acquired gesture information is an instruction corresponding to one of the specific operations allowed for the user;
, means for acquiring an apparatus operation instruction from the acquired gesture information and the acquired apparatus status information by using the interpretation information; , and means for executing the acquired apparatus operation instruction.

## Description

### FIELD OF THE INVENTION

The present invention relates to an electronic apparatus for acquiring and executing operation instructions for an electronic apparatus using a remote control.

### BACK OF THE INVENTION

In recent years, almost all electronic apparatuses, including television apparatuses, have been enabled to be operated remotely by remote control. Additionally, accompanying advances in technologies and diversification of user needs, television apparatuses are equipped with numerous functions or are equipped with functions that interact with equipment. In response thereto, television apparatus operations have become diversified and complicated. Therefore, there is a need for remote controls that can respond to the resulting variety of operations. Currently, conventional fixed-button remote controls respond to unique operations. Thus, there has been a limit in the ability to respond to diversified and complicated operations as described above.

At the same time, in recent years, so called touch remote controller is being disseminated. A touch sensor is allocated on a touch screen of a touch remote controller. When a user undertakes actions such as tracing his or her finger across such a touch sensor, such action is detected and a control signal for remote operations is transmitted to a targeted electronic apparatus. Therefore, differently from conventional button remote controls mentioned above, a touch remote controller can change operations in response to the touch sensor. Flexible operations are thus made possible, which is beneficial. For instance, remote operations using the touch remote controller mentioned above are disclosed in Patent Literature 1. The touch remote controller described in the same literature is characterized by being equipped with a touch panel, and transmission of a signal corresponding to information indicated by the touch panel and touch panel operations allows both remote operation of a targeted control device and changes of information indicated by the touch panel. As described above, the touch remote controller allows flexible operations. Thus, compared with a conventional fixed button remote control, the touch remote controller can be said to be more suitable for diversified and complicated operations.

### BACKGROUND ART

### Patent Literature

Patent Literature 1: Kokai (unexamined patent publication) No. 2005-136518

### SUMMARY OF THE INVENTION

### Problems to be Solved by the Invention

Despite the aforementioned, the touch remote controller described in Patent Literature 1 can only change the information indicated on the touch panel. Nothing changes with such touch remote controller in that after specifying operations on the side of the remote control, signals including the corresponding operation instructions are transmitted.

However, there are needs for the configuration of a remote control to be as simple as possible for easier operation of the remote control. Based on this standpoint, it is desirable that signals transmitted from the remote control should be as simple as possible. After this, in accordance with the interpretation rules retained outside the remote control, signals from the remote control are identified with specific operations. Thereby, it is desirable to execute various operations.

Thus, in accordance with the above problems to be solved by the present invention, an electronic apparatus that can, in operating an electronic apparatus using a remote control (and especially, a touch remote controller), identify the content of an operation by adding an interpretation on the basis of rules held outside the remote control instead of uniquely identifying the content of the operation by a transmission signal from the remote control can be provided.

### Means for Solving the Problems

In order to solve the problems mentioned above, a first aspect of the present invention proposes an electronic apparatus comprising a display outputting unit, an acquisition unit for gesture information acquiring gesture information indicating a user's finger action, etc. from the remote control, an acquisition unit for apparatus status acquiring apparatus status information for distinguishing apparatus status by a combination of a plurality of operations allowed for the user, a storage unit for interpretation information storing interpretation information for interpreting, based on apparatus status information, that the acquired gesture information is an instruction corresponding to one of the specific operations allowed for the user, an acquisition unit for apparatus operation instruction acquiring an apparatus operation instruction from the acquired gesture information and the acquired apparatus status information by using the interpretation information, and an execution unit executing the acquired apparatus operation instruction. Based on a first aspect of the present invention, a second aspect of the present invention provides the electronic apparatus further comprising a storage unit for a GUI screen that stores a GUI screen based on the apparatus status information, and a transmission unit for a GUI screen outputting the GUI screen from the display outputting unit to a display based on the acquired apparatus status information. Based on a second aspect of the present invention, a third aspect of the present invention provides the electronic apparatus further comprising an apparatus status information table determining whether the GUI screen is displayed based on the apparatus status, wherein, when the acquired apparatus status indicates that the GUI screen is not displayed, the execution unit executes the acquired apparatus operation instruction without the GUI screen. Based on any one of the first through the third aspects of the present inventions, a fourth aspect of the present invention provides the electronic apparatus, wherein the execution unit further comprises a direct operation section directly executing the apparatus status instruction in response to a specific operation instruction for a specific operation type received from the remote control. Based on any one of the first through the fourth aspects of the present inventions, a fifth aspect of the present invention provides the electronic apparatus, further comprising a storage unit for a virtual screen storing a virtual screen, virtually arranged at any one or more of a combination of positions around the screen being outputted on the display among up and down, right and left, upper-right, lower-right, upper-left and lower-left, wherein the storage unit for interpretation information further comprises a storing section for interpretation information for selecting a virtual screen storing interpretation information for selecting a virtual screen to interpret. A sixth aspect of the present invention provides a television receiver, comprising the electronic apparatus. A seventh aspect of the present invention provides a controlling apparatus, comprising the electronic apparatus. An eighth aspect of the present invention provides a program for executing an operation instruction for an electronic apparatus, the program comprising the steps of acquiring gesture information indicating a user's finger action, etc. from the remote control, acquiring apparatus status information for distinguishing apparatus status by a combination of a plurality of operations allowed for the user, acquiring an apparatus operation instruction from the acquired gesture information and the acquired apparatus status information by using the interpretation information for interpreting based on the apparatus status information whether the acquired gesture information is an instruction corresponding to any of the operations allowed for the user, and executing the acquired apparatus operation instruction.

### ADVANTAGEOUS EFFECT OF THE INVENTION

Based on the present invention, upon operation of an electronic apparatus using the remote control, it is possible to provide an electronic apparatus that can, in operating the electronic apparatus using a remote control, identify the content of operation by adding an interpretation on the basis of rules held outside the remote control instead of uniquely identifying the content of operation by a transmission signal from the remote control.

### BRIEF DESRIPTION OF THE DRAWINGS

Fig. 1 is a diagram showing an example of a functional block of the electronic apparatus of the first embodiment.
Fig.2 is a diagram showing an example of the remote control used for the electronic apparatus of the present invention.
Fig.3A is a diagram showing an example of an interpretation information table.
Fig.3B is a diagram showing an example of an interpretation information table.
Fig.3C is a diagram showing an example of an interpretation information table.
Fig.4 is a schematic diagram showing an example of hardware configuration of the electronic apparatus of the first embodiment.
Fig.5 is a chart showing an example of processing flow of the electronic apparatus of the first embodiment.
Fig.6 is a diagram showing an example of the functional block of the electronic apparatus of the second embodiment.
Fig.7 is a schematic diagram showing an example of a GUI screen of the electronic apparatus of the second embodiment.
Fig.8 is a schematic diagram showing an example of hardware configuration of the electronic apparatus of the second embodiment.
Fig.9 is a chart showing an example of processing flow of the electronic apparatus of the second embodiment.
Fig.10 is a chart showing an example of processing flow of the electronic apparatus of the third embodiment.
Fig.11 is a diagram showing an example of the functional block of the electronic apparatus of the fourth embodiment.
Fig.12 is a diagram showing an example of the functional block of the electronic apparatus of the fifth embodiment.
Fig.13 is a diagram for explaining a virtual screen.
Fig.14 is a schematic diagram showing an example of the hardware configuration of the electronic apparatus of the fifth embodiment.
Fig.15 is a chart showing an example of processing flow of the electronic apparatus of the fifth embodiment.

### EXPLANATION OF REFERNCES

0100 Electronic apparatus
0110 Outputting unit for display
0120 Acquisition unit for gesture information
0130 Acquisition unit for apparatus status information
0140 Storage unit for interpretation information
0150 Acquisition unit for apparatus operation instruction
0160 Execution unit

### DETAILED DESCRIPTIONS OF PREFERRED EMBODIMENTS

The embodiments of the present invention are explained hereinafter. The mutual relationship between the embodiments and the Claims are described as below. The first embodiment mainly relates to Claims 1, 6, 7, and 8. The second embodiment mainly relates to Claim 2. The third embodiment mainly relates to Claim 3. The fourth embodiment mainly relates to Claim 4. The fifth embodiment mainly relates to Claim 5. Additionally, the present invention is not at all limited by the following embodiments, and can be implemented in various manners without deviating from scope of the purpose of use thereof.

### First Embodiment

### <Outline>

The electronic apparatus of the present embodiment acquires information (gesture information) indicating a user's finger action etc. on the remote control, and information indicating electronic apparatus status (apparatus status information), interprets the gesture information acquired based on the apparatus status information regarding whether the acquired gesture information is an instruction corresponding to any of the operations, and executes the acquired apparatus operations based on such instruction.

### <Configuration>

### (General)

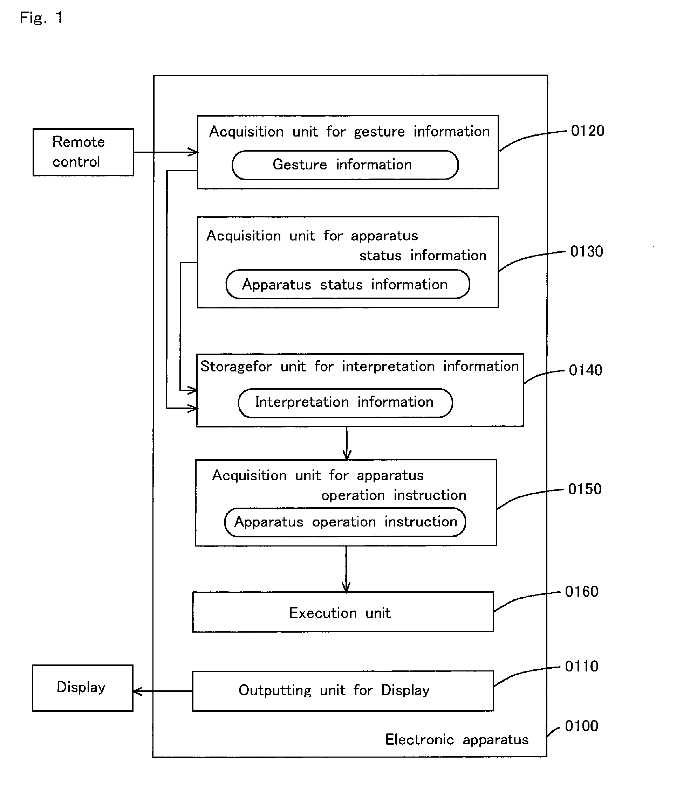

Fig. 1 is a diagram showing an example of the functional block of the electronic apparatus of the present embodiment. The electronic apparatus (0100) comprises an outputting unit for display (0110), an acquisition unit for gesture information (0120), an acquisition unit for apparatus status information (0130), a storage unit for interpretation information (0140), an acquisition unit for apparatus operation instruction (0150), and an execution unit (0160). The electronic apparatus may itself be a target of operation using a control system (hereinafter abbreviated as "operation target apparatus"). The electronic apparatus in such cases includes television receivers, flight control (for aircraft), game machines, monitoring equipment without tuners, computer terminals, digital photo frame machines, car navigation systems, and the like, any of which may be equipped with displays. Alternatively, the electronic apparatus of the present embodiment may be a different apparatus from the operation target apparatus. In such case, the corresponding apparatus may be a device for exclusive use or may be a device for combined use with the electronic apparatus with another function.

### (Outputting unit for display)

An outputting unit for display is used for outputting video content and GUI (Graphical User Interface) screens onto a display. The content of video information to be transmitted to a screen is not particularly limited. It may be possible to indicate video content, such as television programs and menu screens for operation of the electronic apparatus via a GUI screen. Alternatively, it may be acceptable to use an icon that simply indicates certain information in a visual manner. Additionally, a screen outputted onto a display may differ depending on electronic apparatus status. A typical example includes a situation in which the electronic apparatus is a television receiver. Based on switching from viewing status to menu display status, video content is outputted to the display while accessing the resulting viewing status information, and a menu screen is outputted to the display while accessing the resulting menu screen status information. In addition, when the electronic apparatus of the present embodiments is the operation target apparatus itself, such apparatus is equipped with a display. When the electronic apparatus is an apparatus for exclusive use that differs from the operation target apparatus, it is possible to use a display on the operation target apparatus. Thus, it is not necessary for the electronic apparatus itself to be equipped with a display. That is to say, a display is not an essential element of the electronic apparatus of the present embodiment.

### (Acquisition unit for gesture information)

An acquisition unit for gesture information is configured to acquire gesture information. The term "gesture information" refers to the information indicating a user' s finger action, etc. that can be transmitted from the remote control. The remote control assumed in such a case is a so-called a touch remote controller. In the case of a touch remote controller, the gesture information is the information indicating the user's finger action, etc. detected by a touch sensor allocated on a touch screen of a touch remote controller. However, a remote control used for the electronic apparatus of the present invention is not limited to such a touch remote controller. For instance, in regards to such remote control, it may be acceptable to detect actions of the palms, arms, head, body, and feet through a sensor included in the remote control by moving the remote control through actions such as holding the remote control by hand, shaking the remote control, running or jumping with the remote control, or the like. That is to say, the term "finger...etc." as the target of actions indicated by gesture information includes palms, arms, head, body, feet, and the like, as well as fingers. Bodily actions, such as those of fingers, palms, arms, head, body, and feet, do not require direct action impacting the remote control, such as rubbing or shaking the remote control, etc., and it may be acceptable if such actions can be detected by the remote control in any way. For example, the remote control may be configured such that bodily actions are detected and are transmitted to the remote control using video recognition techniques among videos shot by a camera, and the remote control transmits to the acquisition unit for gesture information the information indicating such bodily actions as the gesture information based on the corresponding sensing signal.
The remote control itself is not an essential element of the electronic apparatus of the present invention. It may be possible for gesture information transmitted from a remote control outside the electronic apparatus to be acquired by the acquisition unit for gesture information of the electronic apparatus of the present invention.

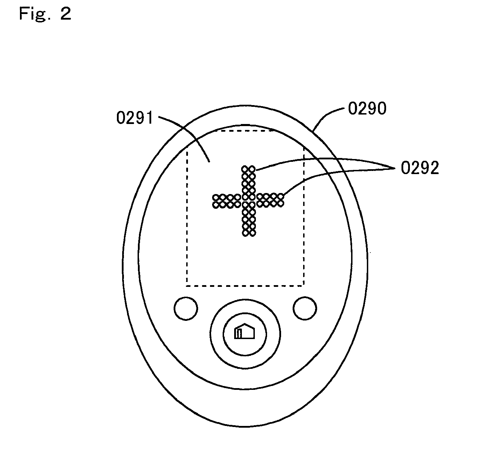

Fig. 2 is a diagram showing an example of the remote control used for the electronic apparatus of the present invention. A remote control (0290) is an example of a touch remote controller. Such touch remote controller comprises touch sensors (0292) configured in a cross-like-shaped manner along the vertical and horizontal centerlines on a touch screen (0291). The touch sensor shown in this Figure is an example of the positioning of a plurality of LED elements. Alternatively, differently from the example of this Figure, it may be acceptable to position a single touch sensor only on a touch screen and to detect finger actions on such touch sensor via the sensing means allocated in a plurality of locations.
In regards to a user's finger actions on a remote control, such figure actions are mainly detected in this example. As a method of detection, for instance, when a finger touches a metal panel of a touch sensor, a method for detecting the variation of voltage occurring between such panel and the finger may be used. In such case, even if a finger does not completely come into contact with a touch sensor, variation of voltage could occur if the finger is placed nearby. Thus, the user's finger actions on a remote control as a target of detection also include actions in the vicinity of a touch sensor. In such case, for instance, individual position coordinates of a plurality of touch sensors (or in the case of a single touch sensor, a plurality of sensing means on such touch sensor) will be retained in advance and the gesture information can be acquired from the information, etc. related to position coordinates of the touch sensor touched by a finger and the temporal relationship of touching, etc.

Additionally, signals transmitted from a touch remote controller will be as simple as possible. Based on this viewpoint, it may be acceptable to obtain gesture information as information in which detected results of finger actions on a remote control are separated into different categories. As patterns of finger actions in the case of the touch remote controller shown in Fig. 2, examples can include (1) the action of longitudinally tracing a plurality of touch sensor surfaces aligned in a longitudinal direction (hereinafter referred to as "vertical touching and sliding action"), (2) the action of transversely tracing a plurality of touch sensor surfaces aligned in a transverse direction (hereinafter referred to as "horizontal touching and sliding action"), (3) the action of tracing a plurality of touch sensor surfaces aligned on the circumference of circle in a circular motion (hereinafter referred to as "circle tracing action"), (4) the action of placing a finger on a single touch sensor or a plurality of touch sensors concentrated at a single location (hereinafter referred to as "tapping action"), and the like. Therefore, in regards to the acquisition unit for gesture information, based on certain rules (e.g., if three specific touch sensors aligned lengthwise are traced sequentially, such action will be considered to constitute longitudinal slide action), it may be acceptable to categorize detected results into any of the patterns mentioned above and to assign the same as gesture information. Thereupon, for slide and trace actions, patterns may be distinguished depending on the length or shortness of the temporal differences among the activation of touch sensors (in other words, whether tracing has taken place quickly or slowly). Alternatively, in the case of tapping action, patterns may be distinguished depending on the position at which a touch sensor has been touched. As such, it is possible to appropriately design a method for determination of patterns within a scope that is not contradictory to the need to make signals transmitted from a touch remote controller be as simple as possible.

### (Acquisition unit for apparatus status information)

An acquisition unit for apparatus status information is configured to obtain apparatus status information. The term "apparatus status information" refers to information for distinguishing apparatus status based on a combination of a plurality of operations allowed for users. In regards to acquisition of apparatus status information, in case that the electronic apparatus itself is the operation target apparatus, it may be acceptable to obtain apparatus status information retained by judgment of the apparatus's own current status. In case that the relevant electronic apparatus is not the operation target apparatus, it may be acceptable to obtain apparatus status information by way of communications means from the operation target apparatus.
In simpler terms, apparatus status information is information for distinguishing apparatus status based on operations. The purpose of such information is to allow apparatus operation through instruction to which interpretation is added on the side of the electronic apparatus based on apparatus status instead of instructions from a remote control. The expression "... distinguishing apparatus status based on ... operations" refers to a situation in which, in case that the relevant operations are volume adjustment or a specific menu selection, apparatus status is distinguished as being viewing status or menu screen status, respectively. However, the expression "... distinguishing apparatus status based on ... operations" does not mean that apparatus status is known through operation information as a trigger (that is to say, this does not mean that operations have already been determined at the stage of transmission of signals from a remote control and based thereupon, apparatus status is distinguished). Such expression simply means that operations are mapped to apparatus status and apparatus status is distinguished based on the nature of operations. Switching of apparatus status is performed through a button (e.g., a "menu button") for switching of apparatus status established on a remote control, for instance. Additionally, as stated in the explanation for configuration of the storage unit for interpretation information described below, the expression "the combination of a plurality of operations" refers to a combination of operations, such as volume control that allows sound volume to be turned up and down while accessing viewing status information of a television receiver, channel selection for such television receiver in ascending or descending order, switchover of broadcasting, and mute or return, and a combination of operations, such as menu transitions downward, upward, rightward, or leftward while accessing menu screen status information, pointer movement, and entry. The present invention is characterized by the fact that it distinguishes apparatus status based on a combination of operations as described above rather than a single operation. Based on such configuration, interpretation takes place in accordance with gesture information from the combination of a plurality of operations in accordance with apparatus status by using interpretation information as described below. Such interpretation allows specification of operation instructions.

Additionally, the expression "operations allowed for users" refers to operations that users are able to perform while accessing relevant apparatus status information. In case that the relevant electronic apparatus is a television receiver, examples would include operations for adjustment of sound volume, operations for channel selection while accessing relevant viewing status information, and operations for selection and execution of menus while accessing relevant menu screen status information.

### (Storage unit for interpretation information)

A storage unit for interpretation information is configured to retain interpretation information. The term "interpretation information" refers to information for determining whether the acquired gesture information is an instruction corresponding to any of the operations allowed based on apparatus status information. It may be possible to retain interpretation information by retaining tables (hereinafter referred to as "interpretation information table(s)") corresponding to apparatus status information, gesture information, and operations allowed, for instance.

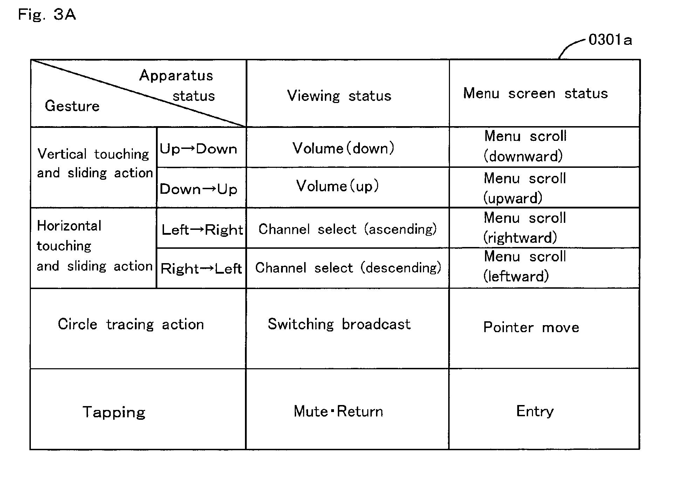

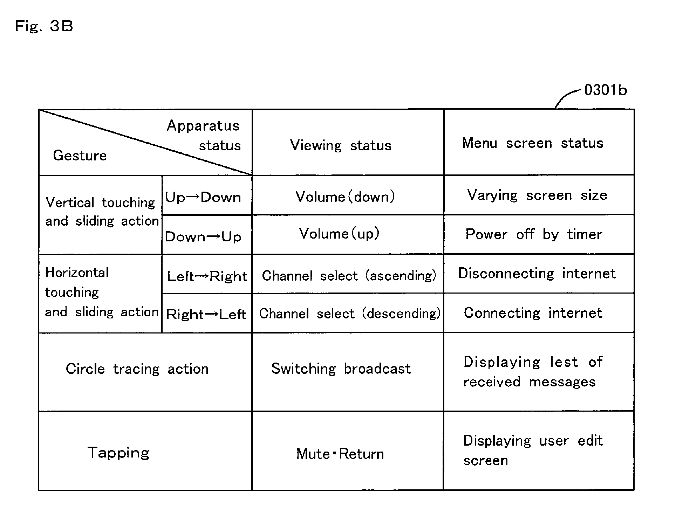

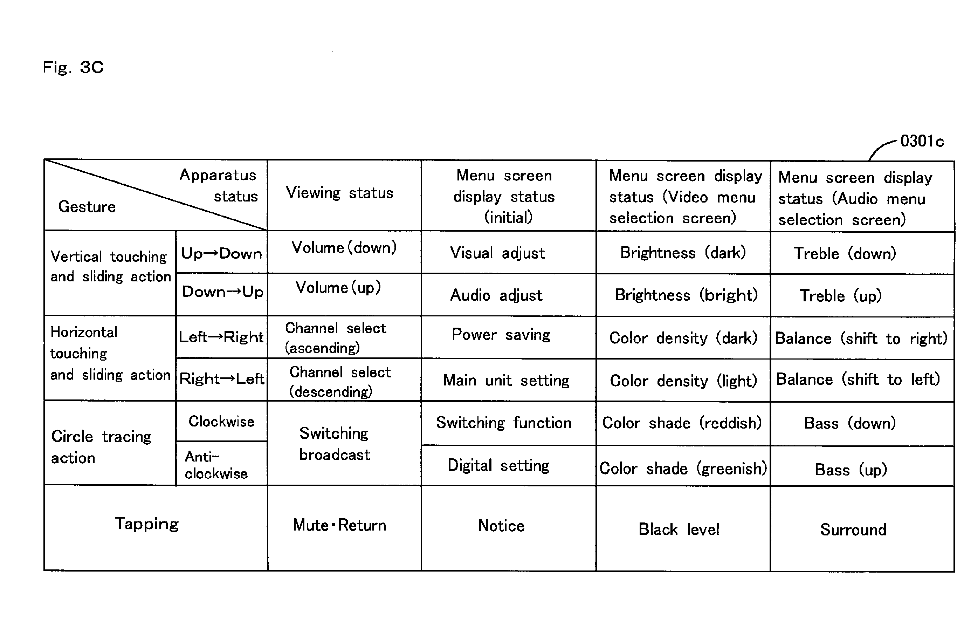

Fig.3A, Fig.3B, and Fig.3C are diagrams showing examples of interpretation information tables. All figures represent examples in which the electronic apparatus is a television receiver. Additionally, in all of these figures, apparatus status is distinguished by a viewing status and a menu screen status in interpretation information tables 0301. Furthermore, gesture is distinguished by vertical touching and sliding action (moreover, such action is distinguished by sliding from top to bottom and sliding from bottom to top), horizontal touching and sliding action (moreover, such action is distinguished by sliding from left to right and sliding from right to left), circle tracing action, and tapping action. Based on the aforementioned apparatus status, the gestures are retained by having them correspond to instructions related to relevant operations.

For example, in Fig. 3A, in case that vertical touching and sliding action is undertaken from top to bottom while accessing relevant viewing status information, such action is interpreted as an instruction related to volume adjustment (turning down the volume). In the same manner, horizontal touching and sliding action is interpreted as an instruction related to channel selection, circle tracing action is interpreted as an instruction for switchover of broadcasting (i.e., terrestrial digital media broadcasting, BS, CS, and the like), and tapping action is interpreted as an instruction related to muting (return to emission of sound by re-tapping action).
Moreover, while accessing relevant menu screen status information, both vertical touching and sliding action and horizontal touching and sliding action are interpreted as instructions for menu scrolling. Based on sliding direction, menu scroll directions correspond to such direction visually. The term "menu scroll" refers to scrolling through targeted menus that are highlighted as currently selectable menus from among a plurality of menus displayed on a display screen (for instance, such menus may be for video adjustment, sound adjustment, and energy-saving setup; information on each menu is described below) by moving highlighted positions up and down and left and right across the surface of the display screen. Moreover, a circle tracing action is interpreted as an instruction for operations that move a pointer appearing on a screen in the direction of action. Tapping action is interpreted as an instruction for making an entry for selection on menus that allow selection. As described above, all gestures performed while accessing menu screen status information about the example are instructions for operations related to movement and selection on a screen.
Menu screen status assumed herein is a screen that displays menus for operations of television receiver by using a part of display. Typically speaking, video content is shrunken so as to occupy a smaller region within a display, and the resultant is displayed. Menus are then displayed in the remaining area of the display. Alternatively, a menu screen may be displayed so that it covers the full display.
In addition, simple examples for easy understanding are indicated by this Figure. In reality, as described in explanations of the acquisition unit for gesture information, it is possible for gestures to be determined based on more detailed patterns within a scope not contradictory to the request for signals transmitted from a touch remote controller to be as simple as possible. Based on the aforementioned, it is possible to establish interpretation standards for instructions in a more detailed manner. For instance, in regards to operations corresponding to tapping information, different operations may be designated based on position coordinates of a touch sensor as the targets of tapping.

Fig.3B is a diagram showing a separate example of an interpretation information table. In this Figure, instructions for operations corresponding to viewing status gestures are the same as those in Fig. 3A. However, instructions for operations corresponding to menu screen status gestures are related not to movement or selection as stated in Fig. 3A but to the content of a menu. More specifically, for instance, vertical touching and sliding action (sliding from top to bottom) corresponds to a menu for "Varying screen size." Vertical touching and sliding action (sliding from bottom to top) corresponds to a menu for "Power off by timer." Additionally, tapping action corresponds to operations for entry in the same case as that of Fig. 3A. Therefore, for instance, while accessing menu screen status information, when a user performs vertical touching and sliding action (from top to bottom) on a remote control, status information in which a "Varying screen size" menu can be selected appears. Next, when tapping action is undertaken, the corresponding menu is selected, and screen size will be changed through the processing of an acquisition unit for apparatus operation instruction and an execution unit thereafter. As to how screen size will be changed, rules that are separately determined may be retained. In such case, as long as a screen size is unambiguously specified, it is possible to change to a relevant screen size through selection of the corresponding menu. Alternatively, in regards to the examples stated above, in the case of a plurality of screen sizes, for instance, apparatus status information is subdivided into initial state and screen size variance menu screen status information. After the "Varying screen size" menu has been selected, it may be possible to make an interpretation based on gestures in accordance with operation instructions corresponding to each gesture on a menu screen regarding screen size variance menu screen status information.

Fig.3C is a diagram showing an example of a case in which a menu screen status is subdivided. Such subdivision is effective for cases in which there exist multiple choices (i.e., in case that multiple screen size candidates are indicated for choices) corresponding to operations selected as stated in the examples above (varying screen size as in the examples above). Moreover, such subdivision is also effective for cases in which a menu is configured in a hierarchical manner. When an upper menu is selected, a plurality of submenus located at a lower position than the upper menu can be displayed in a selectable manner. This Figure indicates an example of such a hierarchical menu.
Based on this example, the menu screen status information for apparatus status is subdivided into menus: an initial state, "Visual adjust," "Audio adjust," (diagrammatic illustration is omitted hereinafter)"Power saving," "Main unit setting," "Switching function," "Digital setting," and "Notice." In addition, a "Visual adjust" menu is a menu for adjusting video brightness to a preferable state. An "Audio adjust" menu is a menu for adjusting audio balance to a preferable state. A "Power-saving" menu is a menu for energy conservation, such as with an "off-timer." A "Main unit setting" menu is a menu for adjustment based on usage environment, such as regional setup. A "Switching function" menu is a menu for setup and switchover of functions, such as Familink (registered trademark). A "Digital setting" menu is a menu for viewing digital broadcasting. And a "Notice" menu is a menu for confirmation of received information.
Additionally, in this example, when a specific menu is selected in its initial state, rules to the effect that a submenu for the corresponding menu is displayed are retained. Therefore, for instance, when a vertical touching and sliding action (sliding from top to bottom) is undertaken in an initial state, based on the table in question, a video menu is selected and displayed. At this time, apparatus status information shows that the "Visual adjust" is being selected. When the next gesture is made in this state, it is interpreted as instructions for operations corresponding to such gesture on a "Menu screen display status (while the "Visual adjust" is being selected)." For instance, when a vertical touching and sliding action (sliding from top to bottom) is undertaken, based on such gesture information, it is interpreted that such gesture is instruction for operations to "Brightness (dark)" regarding a screen. Such instructions are obtained and executed thereafter.

In addition, interpretation information may be edited through addition, change, or deletion by a user. As an additional example, in the example of Fig.3A, in case that apparatus status information is viewing status information, if a gesture is a horizontal touching and sliding action, and if there are no corresponding operation instructions established, the user will add the "Channel select" operation instruction. Examples of changes include changes of volume from "down" to "up" as an operation instruction corresponding to a vertical touching and sliding action (sliding from top to bottom) of the viewing status gesture and changes of volume from "up" to "down" as an operation instruction corresponding to a vertical touching and sliding action (sliding from bottom to top). And another example includes that in case that operation instruction is identified based on the speed of vertical touching and sliding action, if sliding takes place at a certain speed or greater, certain volume changes will take place. And in case that sliding takes place below a certain speed, certain volume changes will take place in accordance with the aforementioned speed. As such, changes take place in accordance with each operation, etc. In such case, the specific information associated with a certain speed and a certain volume may be determined and retained as a separate rule. As an example of deletion, contrary to an example of addition, in case that apparatus status information is viewing status information, when operation instructions corresponding to a horizontal touching and sliding action as a gesture are for "Channel select," a status in which nothing is set up through deletion of the corresponding operation instructions is established. (In such case, when a user undertakes a horizontal touching and sliding action by a remote control while accessing viewing status information, nothing will take place.) In regards to a method of editing by a user as mentioned above, for instance, it may be acceptable for a menu for editing to be established within a menu displayed on a menu screen for status information. In accordance with such screen, apparatus status information inputted by a user and the information from gestures and apparatus operation instructions corresponding to such gestures will be accepted. The interpretation information retained by the storage unit for interpretation information will be rewritten.

### (Acquisition unit for apparatus operation instruction)

An acquisition unit for apparatus operation instruction is configured to acquire apparatus operation instructions using interpretation information based on the acquired gesture information and the acquired apparatus status information. For instance, in accordance with the example of Fig. 3 mentioned above, in case that the acquired apparatus status information is information indicating the viewing status of a television receiver, if the acquired gesture information is information indicating a vertical touching and sliding action from top to bottom, the apparatus operation instruction for adjustment of volume so that volume will be turned down will be obtained through the use of interpretation information stored in the same Figure.

### (Execution unit)

An execution unit is configured to execute the acquired apparatus operation instructions. Based on the example mentioned above, in case that the apparatus operation instruction for adjustment of volume so that volume will be turned down is obtained, such instruction will be executed and volume adjustment so that volume will be turned down will be made.

### (Other)

The above explanations have been made mainly keeping in mind cases in which the electronic apparatus is a television receiver. As mentioned above, the electronic apparatus of the present embodiment is not limited to such cases. For instance, in case that the electronic apparatus is an aircraft's flight control (i.e., such device may be the flight control of an actual aircraft, a simulator for training, or a game), the electronic apparatus is equipped with a display that allows visual display of the direction in which the aircraft is travelling. It is possible to execute an instruction (e.g., operation instruction for moving upward in an aircraft) related to flying based on interpretation of detection results of finger actions from the remote control in relation to apparatus status information for the aforementioned display.

### (Hardware configuration)

Next, the hardware configuration for the electronic apparatus of the present embodiment is explained hereinafter.

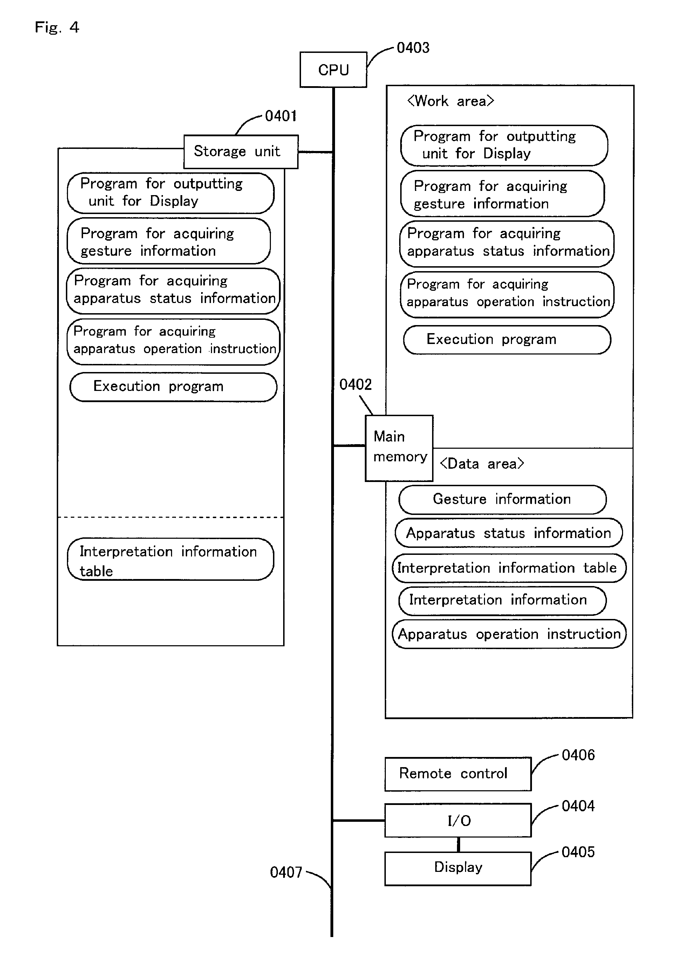

Fig.4 is a schematic diagram showing an example of hardware configuration of the electronic apparatus of the present embodiment.
A display outputting unit and an acquisition unit for gesture information of the electronic apparatus of the example comprise "storage unit (recording medium)" (0401), "main memory" (0402), "CPU" (0403), and "I/O" (0404). An acquisition unit for apparatus status, an acquisition unit for apparatus operation instruction, and an execution unit comprise "storage unit (recording medium)", "main memory", and "CPU." Additionally, "display" (0405) and "remote control" (0406) are connected via I/O.
The aforementioned items are interconnected through a data communication path, such as a system bus (0407), and transmit, receive, and process relevant information. The storage unit stores various programs to be executed by CPU. Additionally, main memory provides a work area as an operation area upon execution of programs by CPU. A plurality of memory addresses are assigned to such main memory and storage unit. Programs executed by CPU allow mutual exchange and processing of data through specifying such memory addresses and accessing the same. Based on the example in question, a program for outputting unit for display, program for acquiring gesture information, program for acquiring apparatus status information, program for acquiring apparatus operation instruction, and execution program are stored in the storage unit. These programs are loaded automatically from the storage unit simultaneously with power activation and are located in the main memory, for instance.

Next, an example of the hardware configuration for sections is explained hereinafter. First of all, the hardware configuration of a display outputting unit is explained. A program for outputting unit for display outputs video contents and a GUI screen, such as a menu screen, to a display connected via I/O.
Next, the hardware configuration of an acquisition unit for gesture information is explained. A program for acquiring gesture information receives signals indicating detection results of finger actions from a remote control via I/O and acquires gesture information. Thereupon, based on certain rules, it may be possible to categorize detection results into certain patterns and to obtain gesture information. In such case, the rules for applying detection results to result in certain patterns are retained in the storage unit in advance, and the program for acquiring gesture information loads the same in the main memory and acquires gesture information by comparing detection results to such rules. The acquired gesture information will be stored temporarily in the main memory.
Next, the hardware configuration of an acquisition unit for apparatus status information is explained. A program for acquiring apparatus status information acquires apparatus status information. The acquired apparatus status information will be also stored temporarily in the main memory.
Subsequently, the hardware configuration of a storage unit for interpretation information is explained. Interpretation information is retained in the storage unit in advance in the form of a table or the like (i.e., interpretation information table). An example of the content of an interpretation information table has been already explained using Fig. 3.
Next, the hardware configuration of an acquisition unit for apparatus operation instruction is explained. A program for acquiring apparatus operation instruction loads an interpretation information table in the main memory from the storage unit and acquires apparatus operation instructions by comparing the apparatus status information and gesture information stored in main memory through using interpretation information retained in the corresponding table. The acquired apparatus operation instruction will be also stored temporarily in the main memory.
Next, the hardware configuration of an execution unit is explained. An execution program executes apparatus operations in accordance with apparatus operation instructions stored in the main memory through processing performed by the program for acquiring apparatus operation instruction.

### <Processing flow >

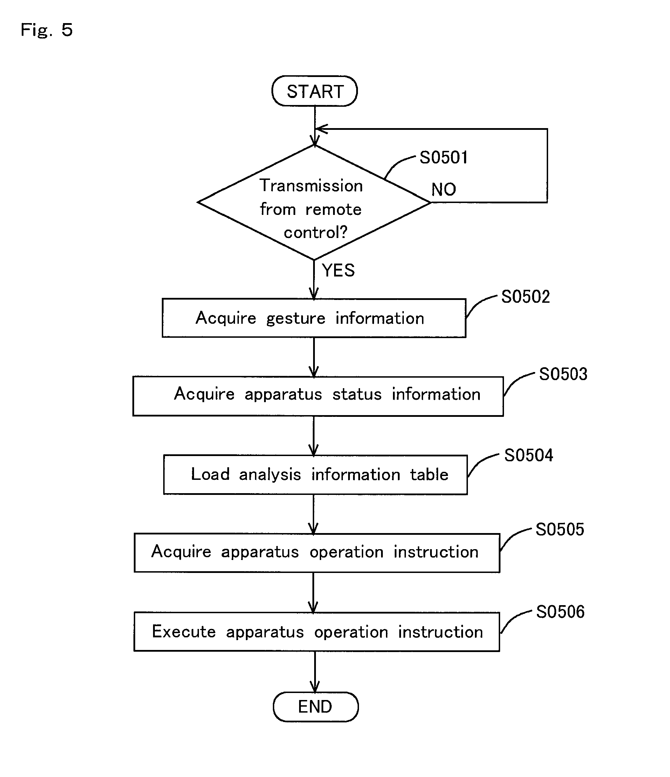

Fig.5 is a chart showing an example of processing flow of the electronic apparatus of the present embodiment.
First of all, at step S0501 for judging whether or not a signal from a remote control has been transmitted, if it has been judged that such signal has been transmitted, the electronic apparatus acquires gesture information at step S0502 of acquiring gesture information.
Next, at step S0503 of acquiring apparatus status information, the electronic apparatus acquires apparatus status information.
Subsequently, at step S0504 of loading of interpretation information table, the electronic apparatus loads the interpretation information table stored in the storage unit, etc. to main memory.
Then, at step S0505 of acquiring an apparatus operation instruction, the electronic apparatus acquires an apparatus operation instruction using interpretation information retained in the interpretation information table loaded at step S0504 based on the gesture information acquired in step S0502 and the apparatus status information acquired in step S0503.
Next, at step S0506 of executing the acquired apparatus operation instruction, the electronic apparatus executes the apparatus operation instruction acquired at step S0505.

### <Effect>

Based on the present embodiment of the present invention, upon operation of an electronic apparatus using the remote control, it is possible to provide an electronic apparatus that can, in operating the electronic apparatus using a remote control (a touch remote controller), identify the content of operation by adding an interpretation on the basis of rules held outside the remote control instead of uniquely identifying the content of operation by a transmission signal from the remote control.

### Second Embodiment

### <Outline>

The electronic apparatus of the present embodiment is basically shared with the electronic apparatus of the first embodiment. Furthermore, the electronic apparatus of the present embodiment is characterized by retaining of a GUI screen based on apparatus status information and a means of outputting of the GUI screen onto a display based on the apparatus status information.

### <Configuration>

### (General)

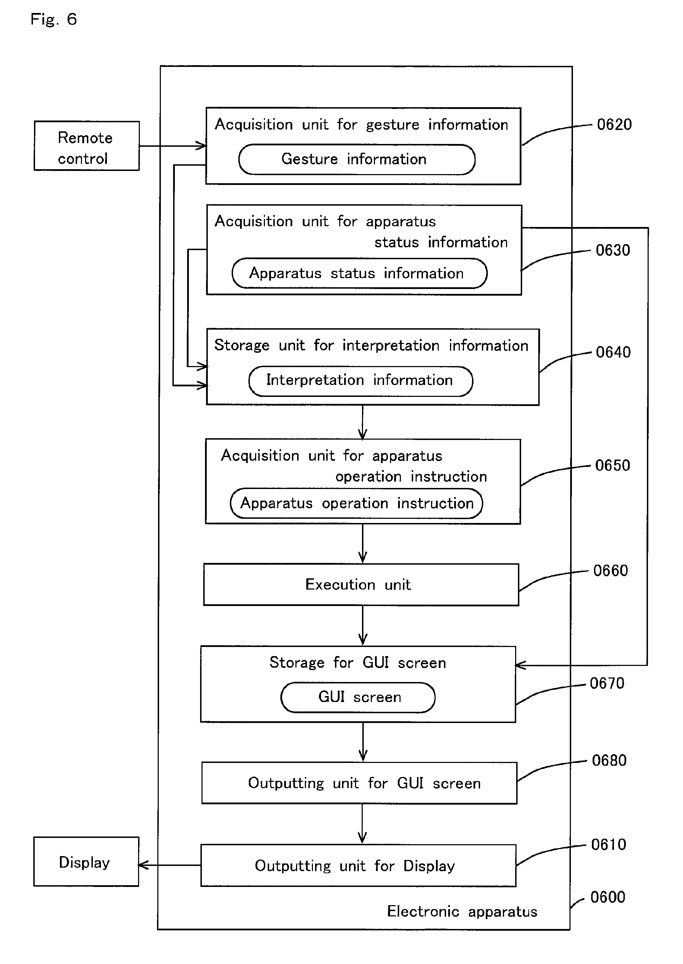

Fig.6 is a diagram showing an example of the functional block of the electronic apparatus of the present embodiment. An electronic apparatus 0600 of the present embodiment comprises an outputting unit for display 0610, an acquisition unit for gesture information 0620, an acquisition unit for apparatus status information 0630, a storage unit for interpretation information 0640, an acquisition unit for apparatus operation instruction 0650, an execution unit 0660, a storage unit for a GUI screen 0670, and an outputting unit for GUI screen 0680. And configuration of each unit other than that for a storage unit for a GUI screen and an outputting unit for GUI screen is basically shared with that explained in the first embodiment. Thus, such explanations are omitted, and configuration of a storage unit for a GUI screen and an outputting unit for GUI screen is explained below.

### (Storage unit for a GUI screen)

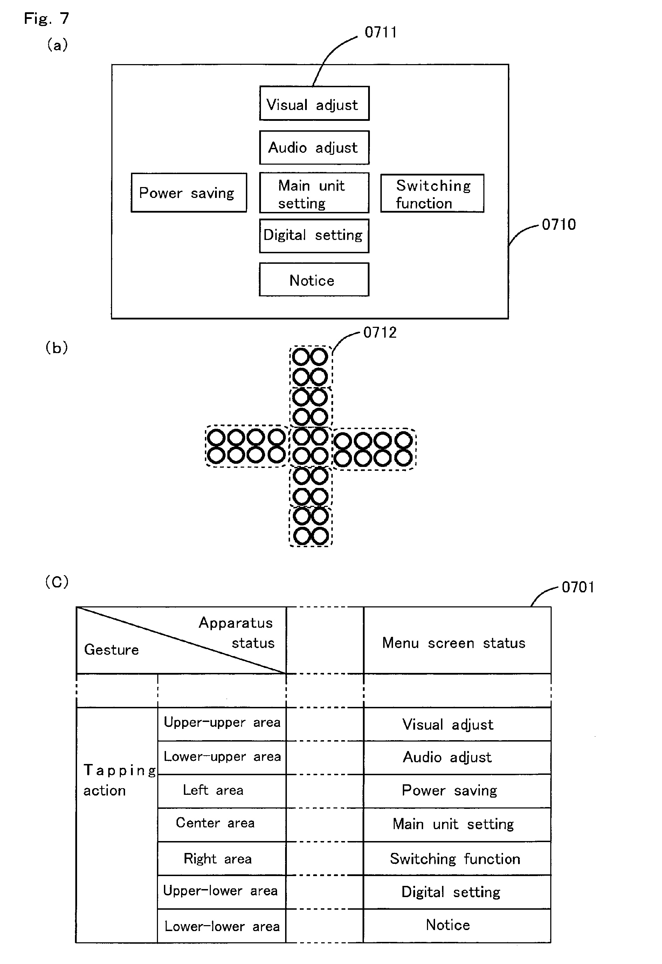

A storage unit for a GUI screen is configured to retain a GUI screen corresponding to apparatus status information. The term "GUI screen" refers to graphics used by computers (computer graphics) that allow a user to perform intuitive operations using a pointing device. The expression "...retain a GUI screen corresponding to apparatus status information" refers to a configuration in which, in case that the electronic apparatus is a television receiver, apparatus status indicated via apparatus status information becomes menu screen status, and a GUI screen for displaying a menu screen in a full display is retained. And such expression also refers to a configuration in which, in case that apparatus status indicated via apparatus status information is viewing status, a GUI screen for displaying a channel currently selected on the top-right of the screen is retained, for instance. A GUI screen that has been created based on apparatus status information in advance may be retained. (The GUI screen indicated in Fig. 7 described below is an example of screens that have been created in advance as such.) In addition, depending on apparatus status, a GUI screen may not be indicated on a display at all and a GUI screen based on the corresponding apparatus status may not be retained. (For instance, a GUI screen may not be retained based on the viewing status of a television receiver.) Such configuration may be included in the configuration of a storage unit for a GUI screen of the present embodiment.

### (Outputting unit for GUI screen)

An outputting unit for GUI screen is configured to output the GUI screen retained based on the acquired apparatus status information from an outputting unit for display onto a display.
Fig.7 is a diagram showing an example of GUI screen of the electronic apparatus of the present embodiment. Fig. 7(a) indicates an example of a GUI screen outputted onto a display. This Figure is also an example of a television receiver. An example of a GUI screen indicated when apparatus status is a menu screen status is shown.

Based on this example, icons indicate the following seven menus: "Visual adjust," "Audio adjust," "Power saving," "Main unit setting," "Switching function," "Digital setting," and Notice." Based on this example, a remote control used for operation of the corresponding television receiver is a touch remote controller in which touch sensors are configured in a cross-like-shaped manner. Therefore, icons for such menus on a menu screen are also configured in a cross-like shaped manner. For example, icon 0711 indicating a "Visual adjust" menu is allocated on the top edge of a cross. Based on this example, considering visual convenience for the user, icons within a GUI screen are located in positions corresponding to detection positions indicated via gesture information acquired from a touch remote controller. That is to say, Fig. 7(b) is a diagram in which a touch sensor portion is enlarged and indicated on a touch-panel control shown in Fig. 2. Multiple LED elements forming the corresponding touch sensor are divided into seven dashed areas. For instance, the top edge area 0712 shown in (b) (called as "upper-upper area" herein) corresponds to a "Visual adjust" icon positioned at the top edge of a menu screen. Therefore, when a user taps a touch sensor allocated in the corresponding upper-upper area 0712 on a remote control, a "Visual adjust" icon will be selected. A user undertakes actions on a remote control while viewing menu icons on a display. Thus, a user can undertake actions while intuitively understanding that when such user taps a touch sensor in the upper-upper area, the "Visual adjust" icon will be selected. Thereby, a high degree of visual convenience will be obtained for a user.

However, it is important that a remote control does not transmit signals specifying that the "Visual adjust" icon will be selected. A signal transmitted from a remote control only relates to gestures in which a touch sensor in the upper-upper area has been tapped. That is to say, nothing is changed about the fact that operations are specified through interpretation of such gesture information and apparatus status information.

Thus, interpretation information is also used for this example. Interpretation information table 0701 that retains such interpretation information is indicated in Fig. 7(c). In this table, for instance, the menu screen status for apparatus status indicated via apparatus status information, tapping action of the upper-upper area indicated via apparatus status information, and a "Visual adjust" menu as an operation correspond with each other. When such apparatus status information and gesture information are acquired, operation instructions for selection of a "Visual adjust" menu will be interpreted. Thus, such operation will be executed. The same applies to other menus.
In addition, the same applies to explanations in the first embodiment regarding the fact that menus may be configured in a hierarchical manner.

### (Hardware configuration)

Next, the hardware configuration for the electronic apparatus of the present embodiments is explained hereinafter.

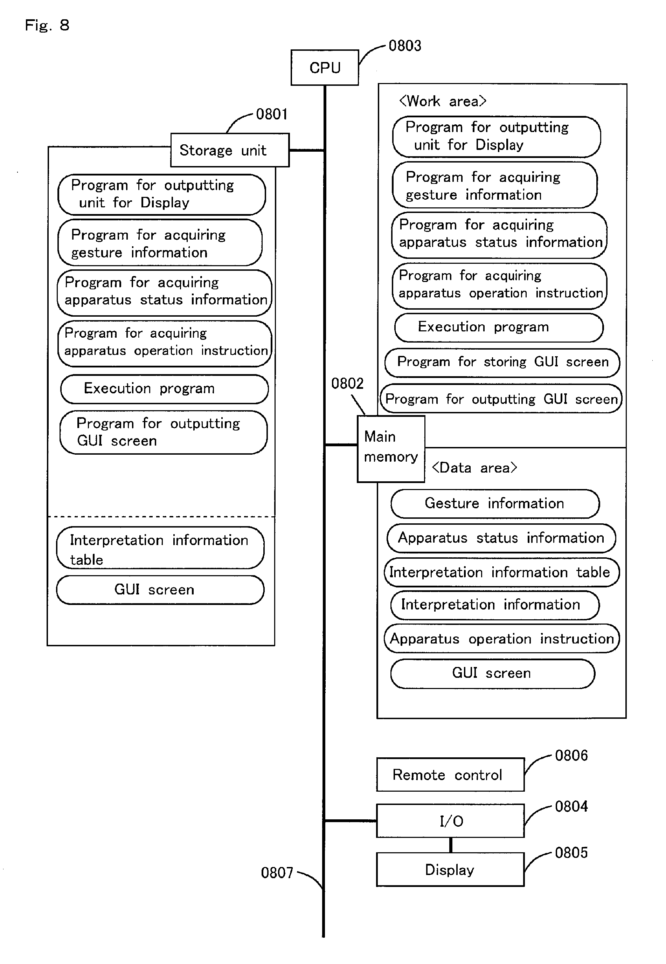

Fig.8 is a schematic diagram showing an example of the hardware configuration of the electronic apparatus of the present embodiment. Only the hardware configuration of a storage unit for a GUI screen and an outputting unit for GUI screen will be explained. Configuration of the remaining units is the same as that explained in the first embodiment. Thus, such explanations will be omitted.
A storage unit for a GUI screen of the electronic apparatus of this example comprises storage unit (recoding medium) 0801, main memory 0802, and CPU 0803. An outputting unit for GUI screen comprises "CPU" (0403), and "I/O" (0804). The aforementioned items are interconnected through a data communication path, such as a system bus (0807), and transmit, receive, and process relevant information. The storage unit stores various programs to be executed by CPU. Additionally, the main memory provides a work area as an operation area upon execution of programs by CPU. Based on the example in question, a program for storing GUI screen as well as the same programs of the electronic apparatus explained in the first embodiment are stored in the storage unit. These programs are loaded automatically from the storage unit simultaneously with power activation and are located in the main memory, for instance.

First of all, the hardware configuration of a storage unit for a GUI screen will be explained. A GUI screen that has been created based on apparatus status information in advance is stored in the storage unit. A plurality of GUI screens may be retained based on the number of apparatus statuses. Alternatively, it may be acceptable not to retain a GUI screen for certain apparatus statuses.
Next, the hardware configuration of an outputting unit for GUI screen will be explained. A program for outputting GUI screen judges whether or not apparatus status indicated via apparatus status information is determined to indicate a GUI screen. As a result, in case that such apparatus status indicated via apparatus status information is determined to indicate a GUI screen, a program for outputting GUI screen loads a GUI screen corresponding to such apparatus status from the storage unit into the main memory. Therefore, it is desirable for rules for displaying a GUI screen based on the nature of apparatus status to have been retained in the storage unit in advance. Such rules allow a program for outputting GUI screen to use such rules and to judge whether or not a GUI screen will be loaded. Subsequently, a program for outputting GUI screen outputs a GUI screen retained in the main memory onto a display connected via I/O. The outputted GUI screen will be outputted by a program for outputting unit for display onto a display.

### <Processing flow>

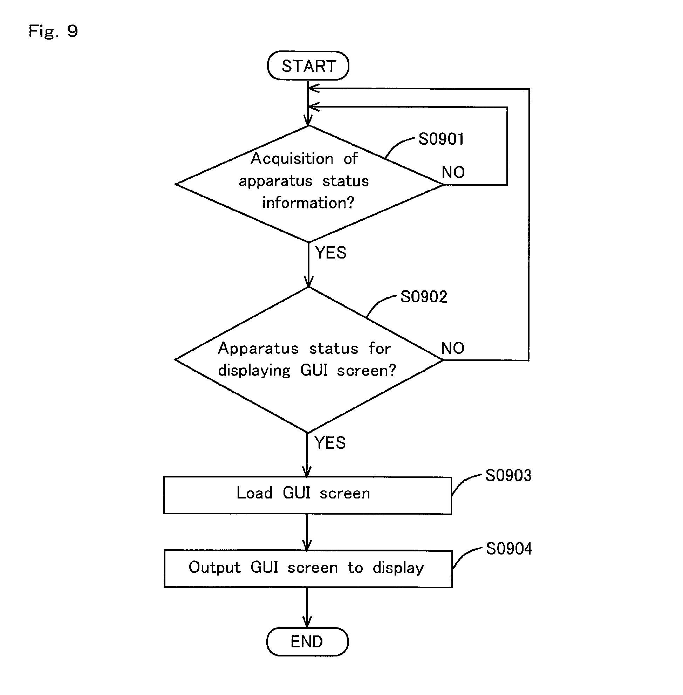

Fig.9 is a chart showing an example of processing flow of the electronic apparatus of the present embodiment. The overall processing flow for execution of apparatus operation instruction is the same as that explained in the first embodiment. Thus, such explanation will be omitted for this
Figure and only the processing flow for outputting of a GUI screen onto a display has been described.
First of all, the electronic apparatus of the present embodiment determines whether or not step S0901 of judging whether or not apparatus status information has been acquired judges whether or not apparatus status information has been acquired. When it has been determined that apparatus status information has been acquired, it will be subsequently judged whether or not such apparatus status is the apparatus status determined for displaying a GUI screen (Step S0902). Such judgment will be made inn accordance with the rules for displaying a GUI screen based on the nature of apparatus status retained in advance, for instance. When it has been judged that such apparatus status is determined for displaying a GUI screen, the electronic apparatus will load a GUI screen at step S0903 for loading the GUI screen.
Subsequently, the electronic apparatus will transmit the GUI screen onto the display and will output such screen onto the display (Step S0904).

### <Effect>

Based on the present invention, upon specifying of operations of the electronic apparatus using a remote control, greater visual convenience can be granted to a user, and thereby, a user can undertake actions while intuitively understanding operations.

### Third Embodiment

### <Outline>

The electronic apparatus of the present embodiment is basically shared with the electronic apparatus of the second embodiment. However, the electronic apparatus of the present embodiment is characterized by a configuration in which it retains an apparatus status information table that regulates whether or not the apparatus status displays a GUI screen. In case that it has been judged that the corresponding apparatus status will not display a GUI screen as a result of judgment using such table, apparatus operation instructions will be executed without displaying a GUI screen.

### <Configuration>

### (Apparatus status information table)

The electronic apparatus of the present embodiment is basically shared with the electronic apparatus of the second embodiment. However, the electronic apparatus of the present embodiment retains an apparatus status information table. The apparatus status information table is a table that determines whether or not a GUI screen will be displayed based on apparatus status. More specifically, for instance, in case that the electronic apparatus is a television receiver, if apparatus status is viewing status, a GUI screen will not be displayed. In case that apparatus status is a menu screen status, a GUI screen will be displayed. The apparatus status information table regulates such matters.

### (Execution unit)

In case that it has been determined that the acquired apparatus status will not display a GUI screen, an execution unit is configured to execute the acquired apparatus operation instruction without displaying a GUI screen. The configuration related to execution of apparatus operation instructions is the same as those mentioned in the first and second embodiments. That is to say, an acquisition unit for apparatus operation instruction acquires apparatus operation instruction using interpretation information based on the acquired gesture information and the acquired apparatus status information, and an execution unit executes the corresponding apparatus operation instruction. For instance, in case that the aforementioned apparatus status information table is retained, if the apparatus status is viewing status, the execution unit will execute operations for adjustment of volume corresponding to the information in which gesture information indicates a vertical touching and sliding action without displaying a GUI screen.

There are some cases in which, in regards to the configuration that allows greater visual convenience to be given to a user by displaying a GUI screen, there is no need to display a GUI screen. In such cases, the purpose of this example is to omit such display of a GUI screen, to execute apparatus operation instructions immediately, and to allow execution of efficient processing by omitting of unnecessary procedures. For instance, based on the example mentioned above, in regards to a viewing status of television receiver, there are not many types of targeted operations compared with menu screen status. There is no need for a user to visually confirm operations via a GUI screen. Thus, it is more efficient to execute adjustment of volume and selection of channels immediately without displaying a GUI screen. Thus, such configuration can be said to be desirable.

### <Processing flow>

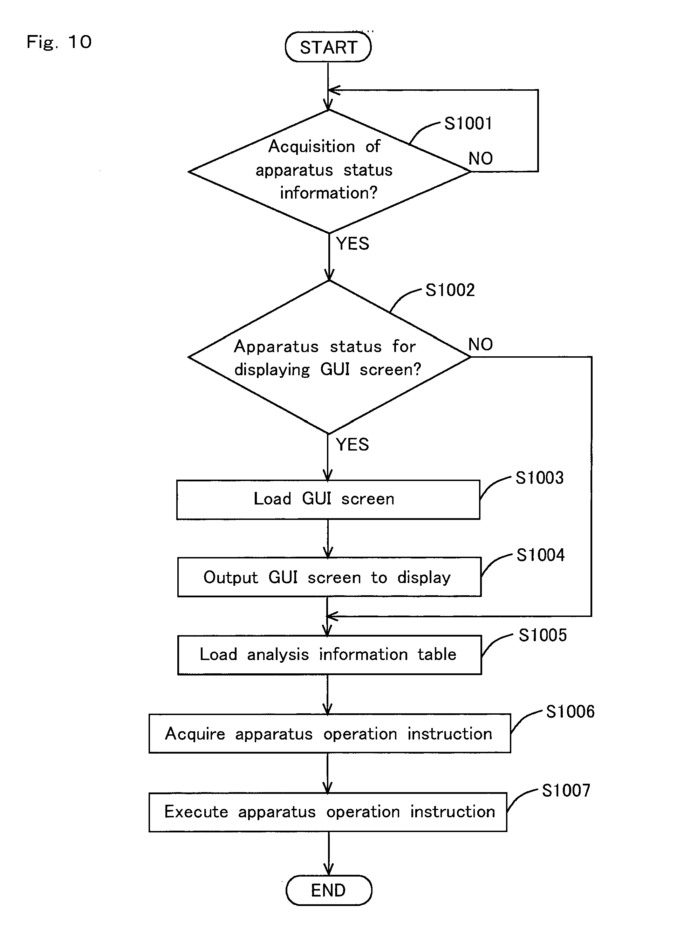

Fig.10 is a chart showing an example of processing flow of the electronic apparatus of the present embodiment. In this Figure, the overall processing flow for execution of apparatus operation instructions is the same as that explained in the first embodiment. Thus, such explanation will be omitted for this Figure and only the processing flow for outputting of a GUI screen onto a display and for execution of apparatus operation instructions thereafter has been described.
The processing flow shown in this Figure is basically shared with that shown in the second embodiment of Fig. 9. However, at step S1002 of judging whether or not it has been determined that the acquired apparatus status will display a GUI screen, in case that it has been determined that the acquired apparatus status will not display a GUI screen, the electronic apparatus will immediately move to step S1005 of loading of an interpretation information table not via the step of outputting of a GUI screen (Step S1003 and S1004), and will execute the corresponding processing. The processing flow thereafter is the same as that of the first embodiment.

### <Effect>

There are some cases in which, in regards to the configuration that allows greater visual convenience to be given to a user by displaying a GUI screen, there is no need to display a GUI screen. In such cases, it is possible to omit such display of a GUI screen, to execute apparatus operation instructions immediately, and to allow execution of efficient processing by omitting of unnecessary procedures based on the invention of the present embodiment.

### Forth Embodiment

### <Outline>

The electronic apparatus of the present embodiment is basically shared with the electronic apparatus any one of the first through third embodiments. However, the electronic apparatus of the present embodiment is characterized by the fact that it retains a section for execution of apparatus operation instruction directly by an execution unit in response to instructions regarding which types of operations are specified by a remote control.

### <Configuration>

### (Execution unit: Direct operation section)

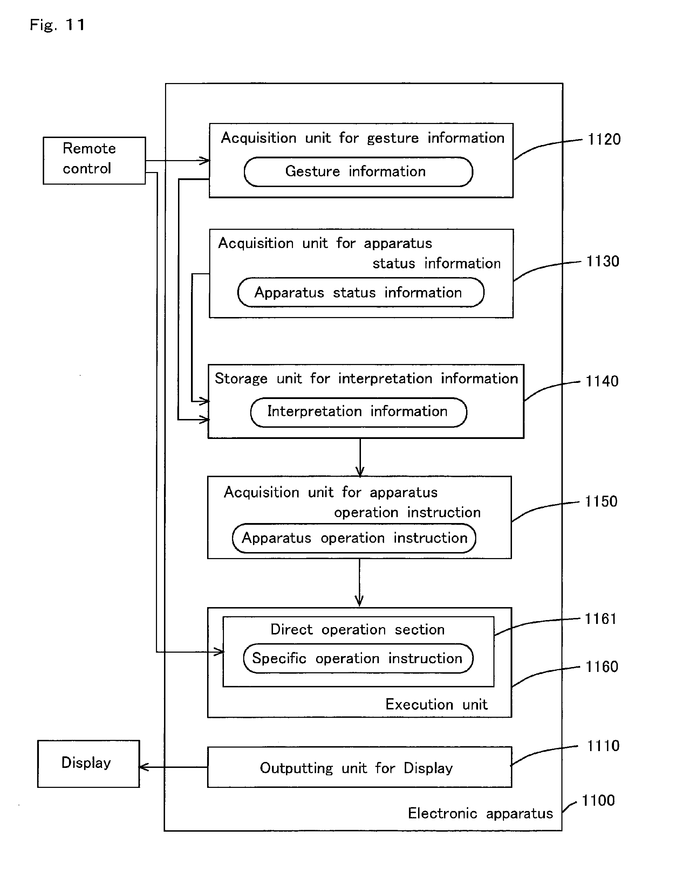

Fig.11 is a diagram showing an example of the functional block of the electronic apparatus of the present embodiment. The electronic apparatus 1100 comprises an outputting unit for display1110, an acquisition unit for gesture information1120, an acquisition unit for apparatus status information 1130, a storage unit for interpretation information1140, an acquisition unit for apparatus operation instruction 1150, and an execution unit 1160. An execution unit comprises a direct operation section 1161. Additionally, diagrammatic representation has been omitted. The electronic apparatus of the present embodiment may comprise a storage unit for a GUI screen and an outputting unit for GUI screen. In addition to the aforementioned configuration, the electronic apparatus of the present embodiment may retain an apparatus status information table, and may be configured so that apparatus operation instruction acquired without displaying a GUI screen is executed in case that it has been determined that the apparatus status acquired by the execution unit is apparatus status that will not display a GUI screen. The aforementioned configurations other than that of the direct operation section of the execution unit are basically shared with those explained in the first embodiment, etc. Such explanations will be omitted. And the configuration of the direct operation section of the execution unit will be explained hereinafter.

### (Execution unit: Direct operation section)

The direct operation section is configured to directly execute apparatus operation instructions in response to specific operation instructions regarding which types of operations are specified by a remote control.

The expression "...directly execute apparatus operation instructions" refers to execution of apparatus operation instructions included in a signal transmitted from a remote control without procedures in which apparatus operation instructions are acquired using interpretation information based on gesture information and apparatus status information. The expression "specific operation instructions regarding which types of operations are specified" refers to instructions specified to an executable degree as apparatus operation instructions, which are the same as apparatus operation instructions in terms of content. That is to say, such instructions are transmitted as the instructions that have already been specified at a stage of transmission from a remote control in the same manner as a conventional button remote control.

That is to say, an electronic apparatus that can, in operating an electronic apparatus using a remote control (and especially, a touch remote controller), identify the content of an operation by adding an interpretation on the basis of rules held outside the remote control instead of uniquely identifying the content of the operation by a transmission signal from the remote control can be provided. This configuration is the basic characteristic of the present invention. At the same time, there are cases in which it is desirable to process execution of apparatus operation instruction without using the aforementioned configuration. Thus, based on this configuration, the configuration for such processing is added. For instance, regarding the viewing status of a television receiver, adjustment for volume and channel selection can be possible concerning a user's remote control operations. Differently from cases in which specific menus are selected from among many menus, the aforementioned operations do not require configurations unique to the present invention using interpretation information. It is safe to assume that direct operation instructions can be directly transmitted from a remote control in the conventional manner. This is because such operations are not contradictory to needs for signals transmitted from a remote control to be as simple as possible. As a matter of fact, it is possible that convenience will be enhanced for a user in that a user's operational attempts are directly executed. Therefore, in regards to the electronic apparatus of the present embodiment, the aforementioned direct operation section has been added to the configuration so that such method of operation can be selected as needed.

The nature of occasions in which this direct operation section is used may be determined in advance. It is possible to think that the apparatus of the present embodiment is configured to retain a table that lists operations as targets of direct operations in the storage unit in advance, to use a remote control that is configured to transmit signals that specify direct operations in the same manner as a conventional remote control only limited to the corresponding targeted operations, and to receive the corresponding signals from such remote control via I/O. Alternatively, the nature of occasions in which this direct operation section is used may be selected by a user. For instance, a remote control may comprise both a section that transmits signals specifying direct operations as in the past and a section that transmits detection signals of finger actions. Thereafter, it is possible for a user to select any one of the sections above by using a switching button established on a remote control. In such case, in regards to the apparatus of the present embodiment, rules to the effect that in case that a user has selected direct operations, direct operations will be performed may be retained in advance. Selection based on a user's input may be accepted via I/O, and in the case of direct operation, direct operation may be performed using such rules.

### <Effect>

Based on the present embodiment, a method of direct operation may be selected from a remote control as needed. Thereby, it can be possible to think that convenience will be enhanced for a user in that a user's attempt to operate is directly executed without running contrary to request for signals transmitted from a remote control to be as simple as possible.

### Fifth Embodiment

### <Outline>

The electronic apparatus of the present embodiment is basically shared with the electronic apparatus any one of the first through fourth embodiments. However, the electronic apparatus of the present embodiment is characterized by the fact that it retains a section that virtually allocates a virtual screen and retains such screen and a section for retaining of the information that interprets operations for switching a screen during output into a virtual screen based on gesture information.

### <Configuration>

### (General)

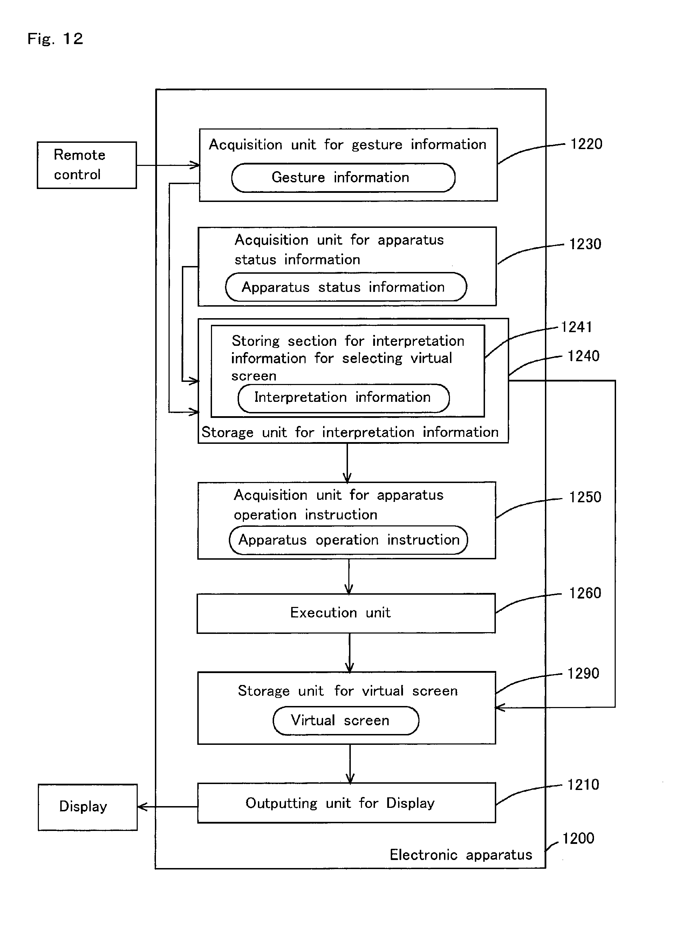

Fig.12 is a diagram showing an example of the functional block of the electronic apparatus of the present embodiment. The electronic apparatus 1200 shown in this Figure comprises an outputting unit for display 1210, an acquisition unit for gesture information 1220, an acquisition unit for apparatus status information 1230, a storage unit for interpretation information 1240, an acquisition unit for apparatus operation instruction 1250, an execution unit 1260, and a storage unit for a virtual screen 1290. The storage unit for interpretation information comprises a storing section for interpretation information for selecting a virtual screen 1241. Although diagrammatic representation has been omitted, the electronic apparatus of the present embodiment may comprise a storage unit for a GUI screen and an outputting unit for a GUI screen. In addition to the aforementioned configuration, the electronic apparatus of the present embodiment may comprise an apparatus status information table, and may be configured so that apparatus operation instructions acquired without displaying a GUI screen is executed in case that it has been determined that the apparatus status acquired by the execution unit is apparatus status that will not display a GUI screen. Moreover, the execution unit may comprise a direct operation section. The aforementioned configurations other than those of the storage unit for a virtual screen and the storing section for interpretation information for selecting a virtual screen of the storage unit for interpretation information are basically shared with those explained in the first embodiment, etc. Such explanations will be omitted. Thus, the configurations of the storage unit for a virtual screen and the storing section for interpretation information for selecting a virtual screen of the storage unit for interpretation information will be explained hereinafter.

### (Storage unit for a virtual screen)

A storage unit for a virtual screen is configured to virtually allocate a virtual screen based on one or more top-and-bottom, right-left, upper-right, lower-right, upper-left, and lower-left actions for a screen during output on a display and to retain the selectable virtual screen. The term "virtual screen" refers to a screen that is virtually located in positions mentioned above (i.e., positions that do not appear on a display) for a screen during output on a display.

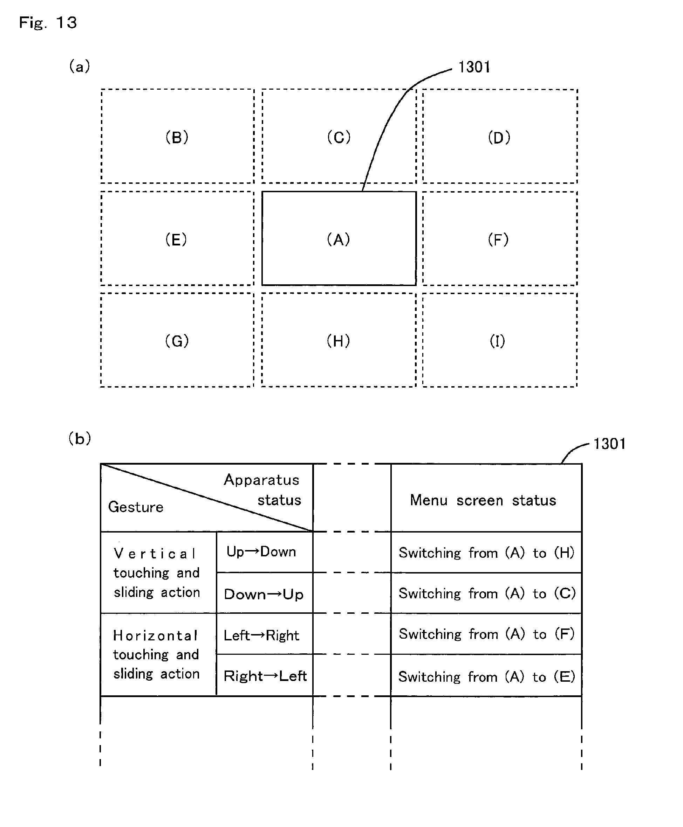

Fig.13 is a diagram for explaining a virtual screen. And Fig.(a) is a diagram showing an example of virtual positioning. Based on the example of this Figure, virtual screens (B) through (I) are located in positions surrounding the screen during output (A) from right to left or up and down on display 1310. In regards to virtual screens, only if an instruction for conversion of outputting as mentioned below is performed, it will be possible to perform outputting onto a display. Such a screen that has already been created is stored in the storage unit in the same manner as the GUI screen mentioned above. Based on the example of this Figure, virtual screens are located in positions adjacent to the screen during output on a display only. Furthermore, virtual screens may be located in positions not adjacent to the screen during output on a display (e.g., a higher position than (C) and slightly to left of (E)). It is desirable to create such virtual screens based on apparatus statuses in the same manner as with the aforementioned GUI screen. Depending on apparatus statuses, it may be acceptable not to retain virtual screens. This would be the same type of case as that of the GUI screen.

### (Storage unit for interpretation information: Storing section for interpretation information for selecting a virtual screen)

The storing section for interpretation information for selecting a virtual screen of the storage unit for interpretation information is configured to retain interpretation information for selecting a virtual screen. The term "interpretation information for selecting a virtual screen" refers to the information that interprets an instruction for switching from a screen during output into virtual screens which are virtually located based on the acquired gesture information.
Fig. 13 (b) indicates an example of interpretation information tables including the interpretation information for selecting a virtual screen. Interpretation information for selecting a virtual screen corresponding to apparatus status information and gesture information is retained in table 1301 of this Figure. For instance, in case that apparatus status is a menu screen status, if a gesture corresponds to vertical touching and sliding action (sliding from top to bottom), information to the effect that a screen during output (A) is switched into a virtual screen (H) based on the corresponding gesture information is retained. Additionally, in case that a virtual screen is located at a lower position than (H), in order to further perform switching to the corresponding screen, a screen located in the original position (H) newly outputted on a display will be the new screen for (A). A screen that has been located in a position lower than (H) will be the new screen for(H). Based on this, the same interpretation may be acceptable in accordance with the same gesture information. Additionally, in case that virtual screens such as (B), (D), (G), and (I) are virtually located in diagonal positions, such as upper-left, etc., in order to switch screen during output (A)onto a display into one such screen, it is acceptable to perform such switching based on a combination of vertical touching and sliding actions and horizontal touching and sliding actions. It may be acceptable to interpret certain gestures as instructions for direct switching into the diagonally located screens.
Thereby, the acquisition unit for apparatus operation instruction acquires an instruction for switching a screen during output into a virtual screen. The execution unit can execute such instruction. Thereby, it is possible to switch the screen outputted onto a display into a virtual screen.

### (Hardware configuration)

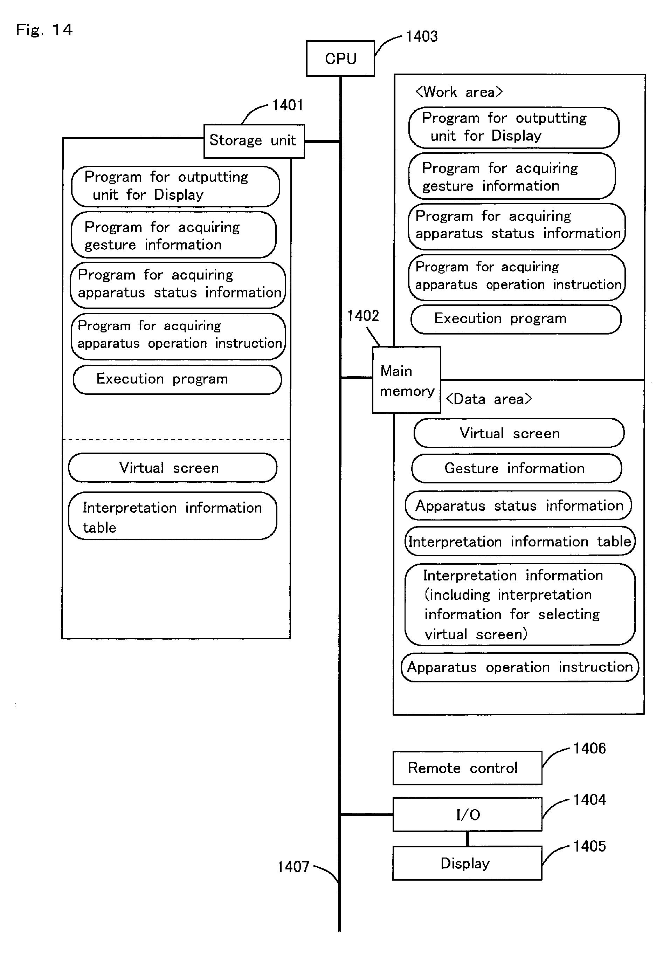

Next, the hardware configuration of the electronic apparatus of the present embodiment is explained. Fig.14 is a schematic diagram showing an example of the hardware configuration of the electronic apparatus of the present embodiment. Only the hardware configuration of a storage unit for a virtual screen and a storage unit for interpretation information will be explained. Configuration of the remaining units is the same as that explained in the first embodiment. Thus, such explanations will be omitted.
The storage unit for a virtual screen and the storage unit for interpretation information of the electronic apparatus of this example (including a storing section for interpretation information for selecting a virtual screen) comprise a storage unit (recoding medium) 1401, main memory 1402, and CPU 1403. The aforementioned items are interconnected through a data communication path, such as a system bus (1407), and transmit, receive, and process relevant information. Next, the hardware configurations of each unit are explained.
First of all, the hardware configuration of the storage unit for a virtual screen is explained. Virtual screens that have already been created in advance are retained in the storage unit. A plurality of virtual screens may be retained based on the example of Fig. 13 mentioned above. Additionally, it is desirable to create virtual screens based on apparatus statuses. Therefore, a plurality of types of virtual screens may be retained.
Subsequently, the hardware configuration of the storing section for interpretation information for selecting a virtual screen of the storage unit for interpretation information is explained. The configuration of such section is basically the same as explanation of the configuration of the storage unit for interpretation information of the first embodiment. The only fact that differs is that retained interpretation information contains interpretation information for selecting a virtual screen.

### <Processing flow>

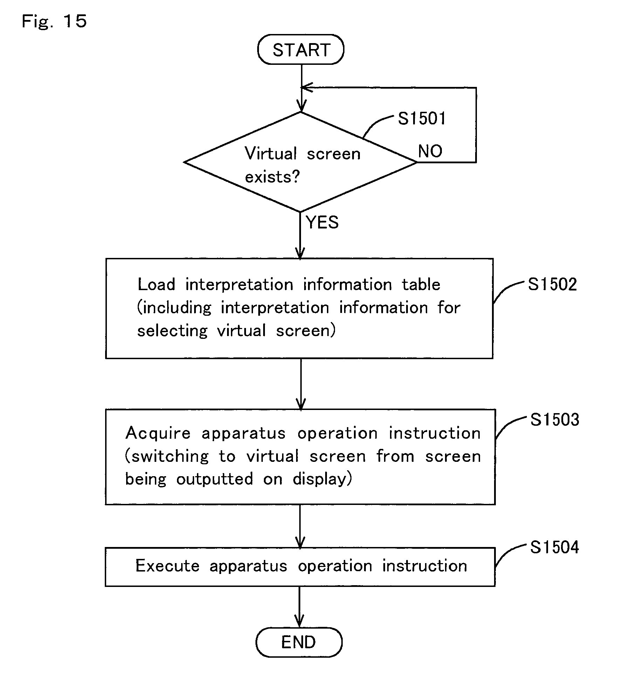

Fig.15 is a chart showing an example of flows of processing of the electronic apparatus of the present embodiment. An overall processing flow for execution of apparatus operation instructions is also the same as that explained in the first embodiment in this Figure. Thus, such explanation will be omitted and only the processing flow for switching from a screen outputted on a display into a virtual screen has been described.
At step S1501 of judging whether or not a virtual screen exists, in case that is has been judged that there exists such a screen, at step S1502 of loading of an interpretation table, the electronic apparatus loads the interpretation information table stored in the storage unit into the main memory. The interpretation information for selecting a virtual screen is retained in such interpretation information table based on the present embodiment.
Next, at step S1503 of acquiring of an apparatus operation instruction, the electronic apparatus acquires apparatus operation instructions for switching from a screen during output into a virtual screen based on interpretation of the interpretation information for selecting a virtual screen corresponding to gesture information and apparatus status information that have already been acquired (in this Figure, the description of the acquired steps).
Furthermore, at step S1504 of execution of apparatus operation instructions, the electronic apparatus executes the corresponding instructions. Thereby, switching from a screen during output onto a display into a virtual screen will take place.

### <Effect>

Based on the present embodiment of the invention, in regards to switching from a screen outputted onto a display into a virtual screen, configuration of a remote control should be as simple as possible. Thereafter, it is possible to execute a greater number of operations.

## Claims

1. An electronic apparatus comprising:
a display outputting unit;
an acquisition unit for gesture information acquiring gesture information indicating a user's finger action, etc. from the remote control;
an acquisition unit for apparatus status acquiring apparatus status information for distinguishing apparatus status by a combination of a plurality of operations allowed for the user;
a storage unit for interpretation information storing interpretation information for interpreting, based on apparatus status information, that the acquired gesture information is an instruction corresponding to one of the specific operations allowed for the user;
an acquisition unit for apparatus operation instruction acquiring an apparatus operation instruction from the acquired gesture information and the acquired apparatus status information by using the interpretation information; and
an execution unit executing the acquired apparatus operation instruction.

2. The electronic apparatus according to Claim 1, further comprising:
a storage unit for a GUI screen storing a GUI screen based on the apparatus status information; and
a transmission unit for a GUI screen outputting the GUI screen from the display outputting unit to a display based on the acquired apparatus status information.

3. The electronic apparatus according to Claim 2, further comprising:
an apparatus status information table determining whether the GUI screen is displayed based on the apparatus status,
wherein when the acquired apparatus status indicates that the GUI screen is not displayed, the execution unit executes the acquired apparatus operation instruction without the GUI screen.

4. The electronic apparatus according to any one of Claims 1 to 3,
wherein the execution unit further comprises a direct operation section directly executing the apparatus status instruction in response to a specific operation instruction for a specific operation type received from the remote control.

5. The electronic apparatus according to any one of Claims 1 to 4, further comprising:
a storage unit for a virtual screen storing a virtual screen, virtually arranged at any one or more of combinations of positions around the screen being outputted on the display among up and down, right and left, upper-right, lower-right, upper-left and lower-left,
wherein the storage unit for interpretation information further comprises a storing section for interpretation information for selecting a virtual screen storing interpretation information for selecting a virtual screen to interpret.

6. A television receiver, comprising the electronic apparatus.

7. A controlling apparatus, comprising the electronic apparatus.

8. A program for executing an operation instruction for an electronic apparatus, the program comprising the steps of:
acquiring gesture information indicating a user's finger action, etc. from the remote control;
acquiring apparatus status information for distinguishing apparatus status by a combination of a plurality of operations allowed for the user;
acquiring an apparatus operation instruction from the acquired gesture information and the acquired apparatus status information by using the interpretation information for interpreting based on the apparatus status information whether the acquired gesture information is an instruction corresponding to any of the operations allowed for the user; and
executing the acquired apparatus operation instruction.
